(19) Europäisches Patentamt
European Patent Office
Office européen des brevets

(11) Numéro de publication: **0 011 888**
**A1**

(12) # DEMANDE DE BREVET EUROPEEN

(21) Numéro de dépôt: **79200630.6**

(22) Date de dépôt: **29.10.79**

(51) Int. Cl.$^3$: **B 60 C 27/04**
B 60 B 15/12

(30) Priorité: **01.12.78 IT 6975678**

(43) Date de publication de la demande:
**11.06.80 Bulletin 80/12**

(84) Etats Contractants Désignés:
**AT BE CH DE FR GB LU NL SE**

(71) Demandeur: **RETTAGLIATI CARLO & C. s.n.c.**
**Via Carso 25**
**I-10141 Torino(IT)**

(72) Inventeur: **Rettagliati, Carlo**
**Via Carso 27**
**I-10141 Torino(IT)**

(72) Inventeur: **Rettagliati, Carluccio**
**Via Carso 27**
**I-10141 Torino(IT)**

(72) Inventeur: **Fantin, Sisto**
**Via Monginevro 172 int. 9**
**I-10141 Torino(IT)**

(74) Mandataire: **Patrito, Pier Franco, Dr. Ing.**
**Via Don Minzoni 14**
**I-10121 Torino(IT)**

(54) **Dispositif d'adhérence supplémentaire pour les pneus de véhicules automobiles.**

(57) Dans un dispositif d'adhérence supplémentaire pour les pneus de véhicules automobiles, comprenant des étriers en acier à appliquer lelong de la périphérie du pneu et un dispositif central de traction pour maintenir sous pression ces étriers contre la surface du pneu, un disque (8) avec une saillie en spirale (14) coopère avec des coulisseaux (18-20) déplaçables radialement, chacun desquels est relié à un des étriers (25-27). Les étriers (25-27) sont au moins cinq et chacun d'eux présente une partie radiale (26) glissant entre deux mâchoires (22, 23) reliées au coulisseau (18-20) correspondant, maintenues et poussées élastiquement par un ressort à fermoir (24). Les étriers (25-27) peuvent être abattus dans une position (25') de rangement. Une poignée (15) pour la commande du disque (8) peut être abattue dans une position de repos dans lacquelle elle bloque le dispositif de traction.

./...

EP 0 011 888 A1

FIG. 2

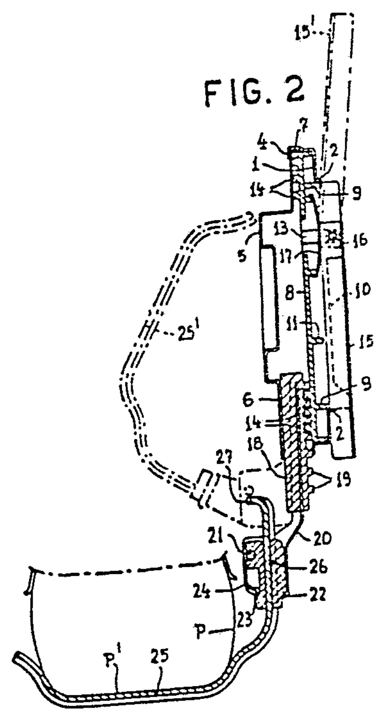

15'
4
7
1
2
14
9
3
13
16
5
17
8
10
25'
11
15
9
6
14
2
18
19
27
20
21
26
24
22
P
23
P'
25

# DISPOSITIF D'ADHERENCE SUPPLEMENTAIRE POUR LES PNEUS DE VEHICULES AUTOMOBILES

La présente invention concerne les dispositifs d'adhérence supplémentaires destinés à être appliqués aux pneus des roues motrices de véhicules automobiles, pour la marche sur neige, boue ou glace, et plus précisément un dispositif d'adhérence du type comprenant des étriers en acier, répartis lelong de la périphérie du pneu et reliés à un dispositif central de traction qui, pendant la marche du véhicule, maintient les étriers adhérents sous pression au pneu et, pendant le montage ou le démontage du dispositif d'adhérence, permet de les éloigner du pneu.

Dans les formes d'exécution connues de ces dispositifs (voir brevets norvégiens Nos. 116.148 et 116.188 et brevet italien No. 964.767), les étriers sont au nombre de trois ou quatre et le dispositif de traction comprend un disque sur lequel sont pivotés, en position excentrique, lesdits étriers, ou bien une roue dentée engrenant avec des crémaillères dont sont pourvus les étriers, ainsi qu'un ressort hélicoïdal qui, après le montage du dispositif sur le pneu, est mis sous tension et accroché à l'un des étriers. La présence de ce ressort est nécessaire à cause de la ré-

BAD ORIGINAL

Ces dispositifs connus ont certains inconvénients. Puisque la distance de chaque étrier du centre de la roue ne peut varier qu'en concomitance avec la variation de la distance de tous les autres étriers, l'étrier qui passe au contact du sol ne peut pas se retirer en proportion de l'aplatissement du pneu, et il provoque un cahot du véhicule si ce dernier n'est pas en marche sur neige profonde ou terre molle: on ne peut donc pas laisser en fonction le dispositif sur une chaussée de consistance normale, même pour des parcours réduits. La mise sous tension et l'accrochage du ressort sont des opérations relativement difficiles et elles présentent même un certain danger; un décrochement accidentel du ressort pendant la marche du véhicule entraîne des graves conséquences, de même que la rupture éventuelle du ressort.

La présente invention a pour but d'apporter un remède aux inconvénients mentionnés des dispositifs connus, et plus particulièrement de réaliser un dispositif d'adhérence supplémentaire du type indiqué en principe, qui réduise au minimum les cahots du véhicule lors du passage des étriers au contact du sol, même dans le cas d'un terrain résistant, en rendant ainsi possible la marche en des conditions acceptables, même sur un terrain consistant, sans démonter le dispositif; qui permette la mise en traction des étriers par une opération exempte de difficultés et de danger, et qui garantisse le maintien de la tension sans l'intervention de moyens élastiques dont le décrochement ou la rupture pourrait provoquer le relâchement soudain et dangereux du dispositif.

Suivant l'invention, ce but est atteint principalement par le fait que le dispositif de traction relié aux étriers comprend un disque ayant une poignée extérieure et une

ORIGINAL

saillie intérieure en forme de spirale, et des coulisseaux reliés chacun à un étrier et guidés à se déplacer en direction radiale par rapport au disque, chaque coulisseau étant pourvu de saillies capables de s'engager avec la saillie en spirale dudit disque, de sorte que la rotation de ce disque provoque un déplacement radial correspondant de tous les coulisseaux et, par conséquent, de tous les étriers.

Grâce à cette caractéristique, l'écartement et le serrage des étriers sont effectués simplement en tournant ledit disque moyennant sa poignée; par l'adoption d'un pas suffisamment réduit de la saillie en spirale, on obtient que le dispositif soit tout à fait irréversible et ne tende pas à s'ouvrir spontanément, et de plus, la manoeuvre du dispositif se fait avec un effort très réduit, tout en permettant un serrage très fort des étriers sur le pneu, serrage qui, par lui-même, assure déjà une considérable réduction des cahots. Le nombre des étriers peut être augmenté au-delà de la limite de quatre des dispositifs connus, en améliorant ainsi l'efficacité du dispositif et en réduisant ultérieurement l'effet des cahots.

Préférablement, la poignée de commande du disque peut basculer et, dans sa position renversée, elle s'engage avec une denture de la boîte fixe du dispositif de traction, en réalisant automatiquement un blocage de sécurité, qui d'ailleurs n'est soumis qu'à des efforts faibles, étant donnée l'irréversibilité du mécanisme.

Selon une autre caractéristique importante de l'invention, chaque étrier est relié au coulisseau correspondant avec l'interposition d'un accouplement glissant qui permet à l'étrier une liberté limitée de déplacement radial par rapport au coulisseau. Grâce à cette caractéristique, cha-

... sol, se retire

BAD ORIGINAL

d'une certaine mesure vers l'intérieur, suivant l'aplatissement du pneu, ce qui réduit au minimum possible les cahots transmis à la roue et au véhicule, ce minimum pouvant être encore plus réduit que celui qui est obtenu per les chaînes ou dispositifs flexibles d'adhérence similaires, grâce à l'épaisseur radiale réduite des étriers par rapport aux branches d'une chaîne.

Enfin, préférablement, entre chaque étrier et le coulisseau correspondant est encore prévue une connection à pivot permettant de faire basculer les étriers vers l'intérieur lorsque le dispositif n'est pas installé sur un pneu. De cette façon, en déplaçant dans la mesure maximale vers l'intérieur les coulisseaux et en faisant basculer vers l'intérieur les étriers, le dispositif peut être rangé avec un encombrement minimal.

La partie fixe ou boîte du dispositif de traction comprend, de préférence, deux coques reliées périphériquement l'une à l'autre, dont celle extérieure constitue un coussinet pour la rotation centrée du disque, et celle intérieure constitue une pluralité de guides radiaux pour les coulisseaux, en assurant ainsi, d'une façon simple et robuste, l'assemblage et le guidage correct de tous les éléments du dispositif.

Une forme de réalisation d'un dispositif d'adhérence supplémentaire pour pneus de véhicules automobiles, suivant l'invention, sera décrite plus en détail dans ce qui suit, à titre d'exemple non limitatif, avec référence aux dessins annexés, dans lesquels:

La figure 1 montre le dispositif selon l'invention en vue de face de l'extérieur, à une échelle réduite et avec une partie interrompue;

La figure 2 en est une coupe verticale suivant la ligne II-II de la figure 1;

La figure 3 montre le disque du dispositif de traction, vu du côté de la saillie en spirale;

La figure 4 montre un coulisseau, vu du côté des saillies coopérant avec la saillie en spirale du disque;

La figure 5 est une vue partielle de l'extrémité de la poignée en position de repos, montrant la coopération de la poignée avec une denture de la boîte fixe; et

La figure 6 est une vue de face de la coque intérieure du dispositif de traction.

La partie fixe du dispositif de traction est constituée par une boîte formée par deux coques, et précisément une coque extérieure 1 et une coque intérieure 5. La coque extérieure 1 présente une fenêtre ayant un bord circulaire 2 replié vers l'extérieur, dans lequel bord sont formées des cavités 3. La coque 1 présente sur sa périphérie un bord 4 qui est refoulé sur la périphérie de la coque intérieure 5 afin de relier entre elles les deux coques et de compléter la boîte. La coque intérieure 5 présente une pluralité de canaux radiaux de guidage 6 et un bord périphérique 7 destiné à s'emboîter dans la coque extérieure 1 pour centrer l'une l'autre les deux coques et pour supporter le refoulement du bord 4 de la coque extérieure 1. Les coques 1 et 5 peuvent être réalisées en tôle estampée.

Dans la coque 1 est monté un disque 8, préférablement en résine synthétique, ayant une saillie circulaire 9 logée dans le bord 2 de la coque 1 pour former un accouplement pivotant. Le disque 8 a aussi deux nervures parallèles 10 définissant un siège diamétral pour la poignée, et des nervures transversales 11 et éventuellement circulaires 11' de renforcement. En outre, le disque 8 présente une ouverture 12 qui passe à travers le disque et dans

BAD ORIGINAL

laquelle débouchent des sièges 13 pour l'accouplement pivotant de la poignée. La surface intérieure du disque 8 présente une saillie 14 s'étendant en spirale à partir de sa périphérie jusqu'à une certaine distance du centre, avec un pas réduit.

Une poignée 15 est réalisée en tôle pliée en U et elle est montée pivotant dans le siège 13 par des bossages 16; dans la forme de réalisation représentée, le montage se fait de l'intérieur, au travers de la fenêtre 12 du disque 8, et la poignée est maintenue en position par un ressort à lame 17 accroché à des saillies du disque 8. L'extrémité pivotée de la poignée 15, en coopérant avec le ressort à lame 17, stabilise deux positions de la poignée: une position de repos, représentée en lignes continues dans la figure 2, et une position opérative 15', représentée en lignes à traits pointillés. La poignée 15 est portée dans sa position opérative pour commander la rotation du disque 8 lors du montage ou démontage du dispositif sur le pneu, et successivement, après le serrage des étriers, elle est amenée à la position de repos. Alors les bras de la section en U de la poignée 15 s'engagent dans les cavités 3 du bord 2 de la coque fixe 1, en immobilisant ainsi la poignée, comme représenté particulièrement dans la figure 5.

Dans la forme de réalisation représentée, les sièges radiaux 6 de la coque intérieure 5 sont au nombre de cinq, et dans chacun d'eux est monté un coulisseau 18, qui est donc guidé par le siège 6 correspondant de sorte à pouvoir se déplacer seulement dans une direction radiale. Chaque coulisseau, réalisé de préférence en résine synthétique, présente sur sa face extérieure une pluralité de saillies 19, configurées de sorte à pénétrer dans le sillon en spirale [illegible] qui entre les spires de la saillie en spirale 14 du disque 8, de sorte que la rotation de ce disque, commandée moyennant la poignée 15, provoque un déplacement correspondant de tous les coulisseaux 18, vers l'extérieur ou vers l'intérieur, suivant le sens de rotation du disque 8.

De chaque coulisseau 18 est solidaire un support 20, réalisé préférablement en tôle estampée et incorporé dans le coulisseau 18 lors du moulage de ce dernier. Le support 20 fait saillie radialement vers l'extérieur, tourne vers le côté intérieur du dispositif (c'est à dire vers le pneu P sur lequel le dispositif sera appliqué) et présente un pivot transversal 21.

Dans le support 20 est monté, tournant autour du pivot 21, un support glissant formé par deux mâchoires de matière synthétique, 22 et 23, lesquelles sont assemblées entre elles et sont retenues sur le pivot 21 par un ressort à fermoir 24. Entre les deux mâchoires 22 et 23 est montée, glissant dans la direction radiale, préférablement avec un certain frottement, une partie radiale 26, se terminant à l'intérieur par une extrémité repliée 27, de l'un des étriers d'adhérence 25. Grâce à cette disposition, l'étrier peut coulisser radialement sur une distance limitée, par rapport au support 20 et, par conséquent, par rapport au coulisseau 18 correspondant.

Pour le montage sur le pneu, on amène la poignée à sa position opérative et on fait tourner le disque 8 de sorte à déplacer les coulisseaux 18 jusqu'à leur position la plus extérieure; les étriers 25 peuvent alors être disposés à cheval sur le pneu P. En tournant le disque 8 dans le sens opposé au précédent, les étriers 25 sont serrés sur le pneu P avec une pression appropriée; en repliant alors la poignée 15 jusqu'à sa position de repos on fixe la position atteinte par le dispositif, comme déjà expliqué précédem-ment. Comme on le comprend, dans cette condition les extrémités repliées 27 des parties radiales 26 des étriers 25 sont appuyées sous pression contre les extrémités intérieures des mâchoires 23 des supports respectifs. Cependant, lorsque, pendant la marche du véhicule, un étrier 25 passe au contact du terrain, où le pneu P s'aplatit en P' (figure 1), grâce à l'accouplement glissant de sa partie radiale 26 l'étrier 25 peut se déplacer vers l'intérieur, en suivant la périphérie du pneu, au lieu de conserver sa position en donnant lieu à un cahot du véhicule. Dans la figure 2, l'étrier est représenté justement dans cette position déplacée radialement vers l'intérieur. Il va de soi que, en continuant la rotation, la poussée vers l'extérieur exercée par le pneu P, lequel reprend sa configuration normale après avoit été aplati au contact du terrain, ramène aussi l'étrier 25 à sa position normale.

Il est avantageux qu'il y ait un certain frottement entre le support de glissement 22-23 et la partie 26 de l' étrier, comme déjà mentionné auparavant, parce que cela permet d'avoir l'étrier immobile par rapport au support pendant l'installation du dispositif sur le pneu, qui en resulte ainsi facilitée.

Lorsque le dispositif est démonté du pneu, en faisant tourner le disque 8 on peut porter les coulisseaux 18 à leur position la plus intérieure, après quoi les étriers 25 peuvent être tournés vers l'intérieur autour du pivot 21 de chaque étrier, jusqu'à la position 25' représentée par des lignes à traits pointillés dans la figure 2, afin de réduire au minimum l'encombrement de rangement du dispositif.

Bien entendu, de différentes modifications peuvent être apportées tant à la forme qu'à la disposition des éléments constructifs décrits, sans sortir du cadre de l'invention. Par exemple, le nombre des étriers 25, et par conséquent le nombre des coulisseaux 18 et des guides radiaux 6, peut être augmenté à six ou encore plus. La poignée 15 peut être façonnée longitudinalement, au lieu d'être rectiligne. Le montage de la poignée 15 sur le disque 8 peut être effectué en engageant les bossages 16, par déplacement longitudinal de la poignée, dans des sièges 13 ouverts latéralement, formés dans les nervures 10 du disque 8, lequel dans ce cas peut être dépourvu de la fenêtre 12. Les bossages d'articulation 16 de la poignée 15 peuvent être remplacés par les extrémités d'un pivot passant au travers de la poignée et faisant saillie sur cette dernière.

* * *

# REVENDICATIONS

1 . Dispositif d'adhérence supplémentaire pour pneus de véhicules automobiles, du type comprenant des étriers en acier reliés à un dispositif central de traction, caractérisé en ce que le dispositif de traction comprend un disque (8) ayant une poignée extérieure (15) et une saillie intérieure (14) en forme de spirale, et des coulisseaux (18-20) reliés chacun à un étrier (25-27) et guidés à se déplacer radialement par rapport au disque (8), chaque coulisseau (18-20) étant pourvu de saillies (19) capables de s'engager avec la saillie en spirale (14) dudit disque (8), de sorte que la rotation de ce disque provoque un déplacement correspondant en direction radiale de tous les coulisseaux et, par conséquent, de tous les étriers.

2 . Dispositif d'adhérence selon la revendication 1, caractérisé en ce que le nombre des coulisseaux (18-20) et des étriers (25-27) est de cinq au moins.

3 . Dispositif d'adhérence selon la revendication 1, caractérisé en ce que la poignée de commande (15) peut être renversée entre une position opérative (15') et une position de repos dans laquelle la poignée (15) s'engage avec des moyens d'arrêt (3) disposés sur une partie fixe (1-2) du dispositif, en bloquant le disque (8).

4 . Dispositif d'adhérence selon la revendication 1, caractérisé en ce que chaque étrier (25-27) présente une partie radiale (26) accouplée à glissement limité avec un support (22-23) relié au coulisseau (18-20) correspondant, de sorte à permettre un tassement de l'étrier dans le sens

BAD ORIGINAL

d'aplatissement du pneu, lors du passage au contact du sol.

5 . Dispositif d'adhérence selon la revendication 1, caractérisé en ce que chaque étrier (25-27) est accouplé avec un support (22-23) relié moyennant un pivot (21) au coulisseau (18-20) correspondant, de sorte à pouvoir être porté dans une position d'encombrement minimal pour le rangement du dispositif.

6 . Dispositif d'adhérence selon les revendications 4 et 5, caractérisé en ce que chaque coulisseau (18-20) est solidaire d'un support (20) pourvu d'un pivot transversal (21), et que la partie radiale (26) de chaque étrier (25-27) coulisse dans un support de glissement (22-23) constitué par deux mâchoires (22,23) assemblées entr'elles et solidarisées avec ledit pivot (21) par un ressort à fermoir (24).

7 . Dispositif d'adhérence selon la revendication 6, caractérisé en ce que lesdites mâchoires (22,23) sont poussées élastiquement contre la partie radiale (26) de l'étrier (25-27), de sorte à introduire un certain frottement dans le coulissement de ladite partie radiale (26).

8 . Dispositif d'adhérence selon la revendication 1, caractérisé en ce que le dispositif de traction comprend une boîte fixe (1-7) constituée par une coque extérieure (1) formant un guide de rotation (2) pour le disque (8), et par une coque intérieure (5) fixée périphériquement (4,7) à la coque extérieure (1) et pourvue de guides radiaux (6) pour les coulisseaux (18-20) des étriers (25-27).

9 . Dispositif d'adhérence selon les revendications 3 et 8, caractérisé en ce que la coque extérieure (1)

présente un bord circulaire (2) en saillie, dans lequel sont formées des cavités (3) formant les moyens d'arrêt pour la poignée (15) dans sa position de repos.

10 . Dispositif d'adhérence selon la revendication 3, caractérisé en ce que la poignée (15) présente des bossages (16) d'articulation qui peuvent être insérés, au travers d'une fenêtre (12) du disque (8), ou au travers d'ouvertures latérales, dans des sièges (13) prévus sur le disque (8), et en ce qu'il est prévu un ressort à lame (17) accroché à des saillies du disque (8), lequel retient en position la poignée (15) et en détermine par déclenchement élastique la position opérative (15') et la position de repos.

* * *

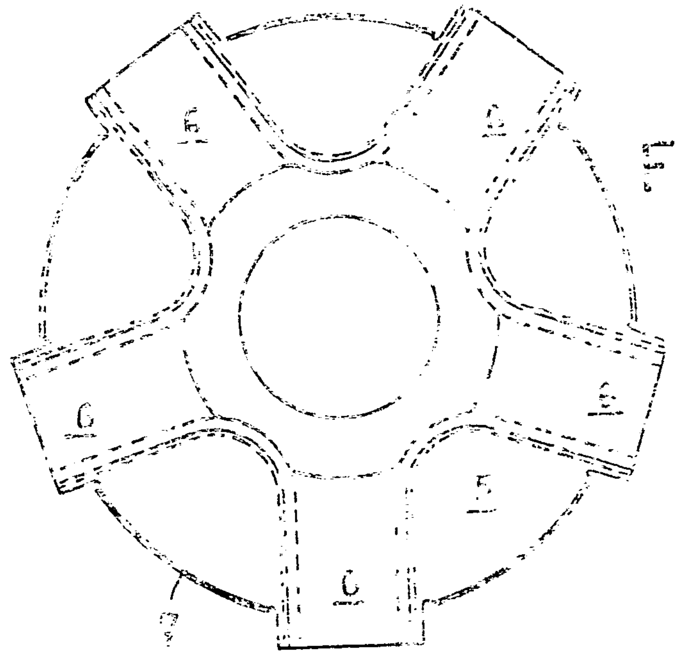


FIG. 6

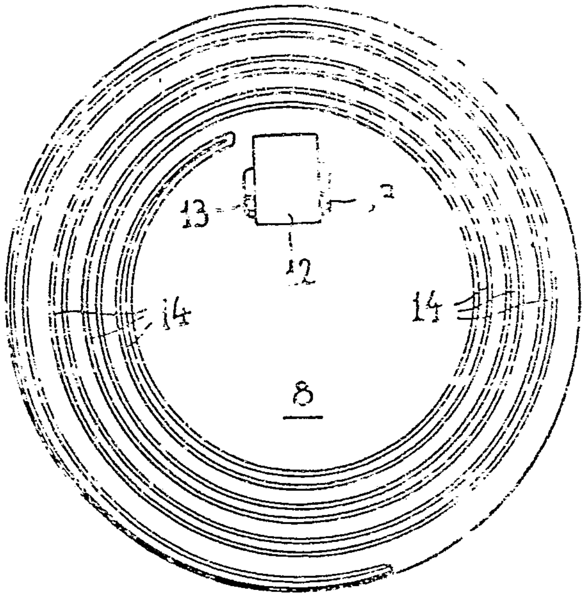


FIG. 3

FIG. 2

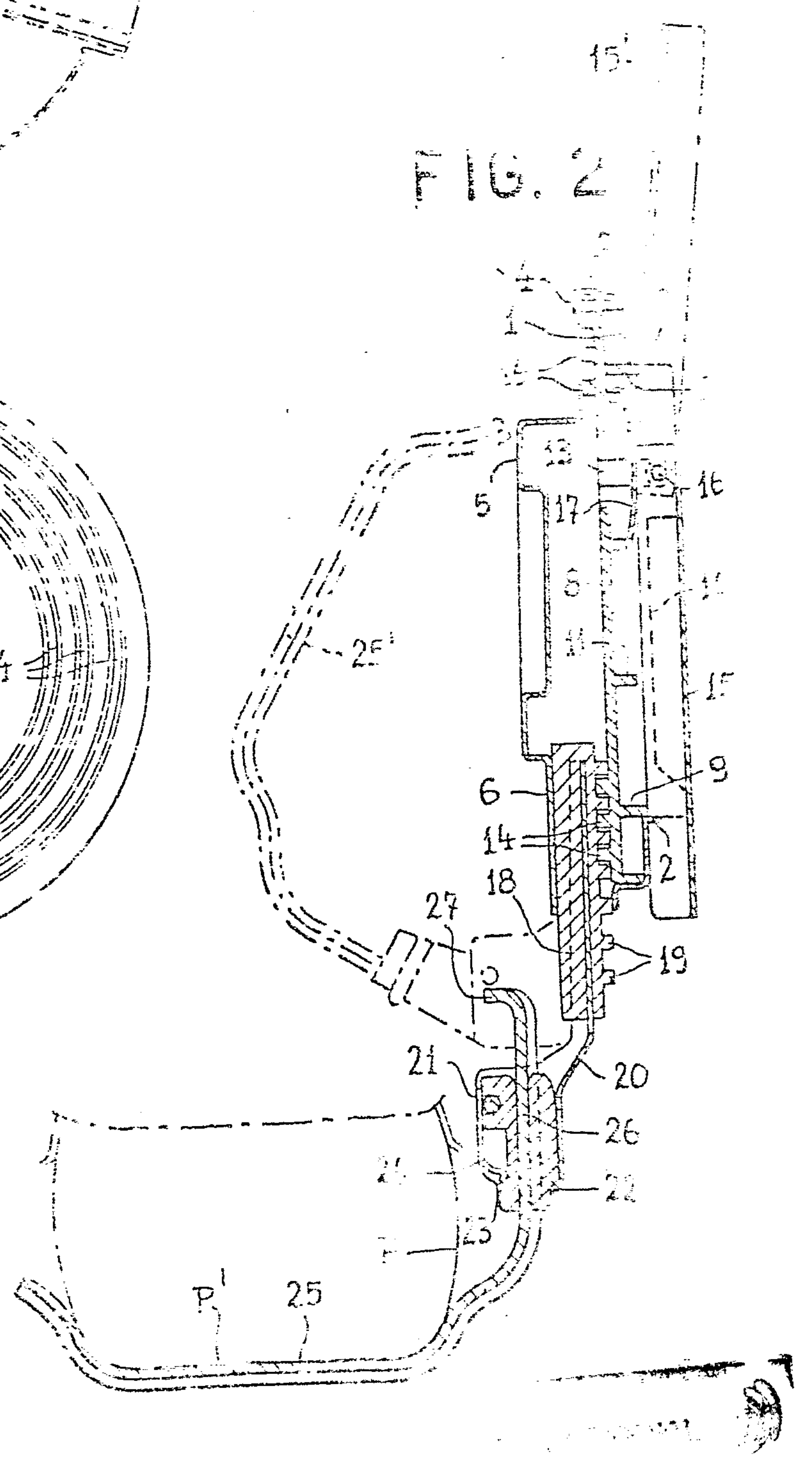

FIG. 1

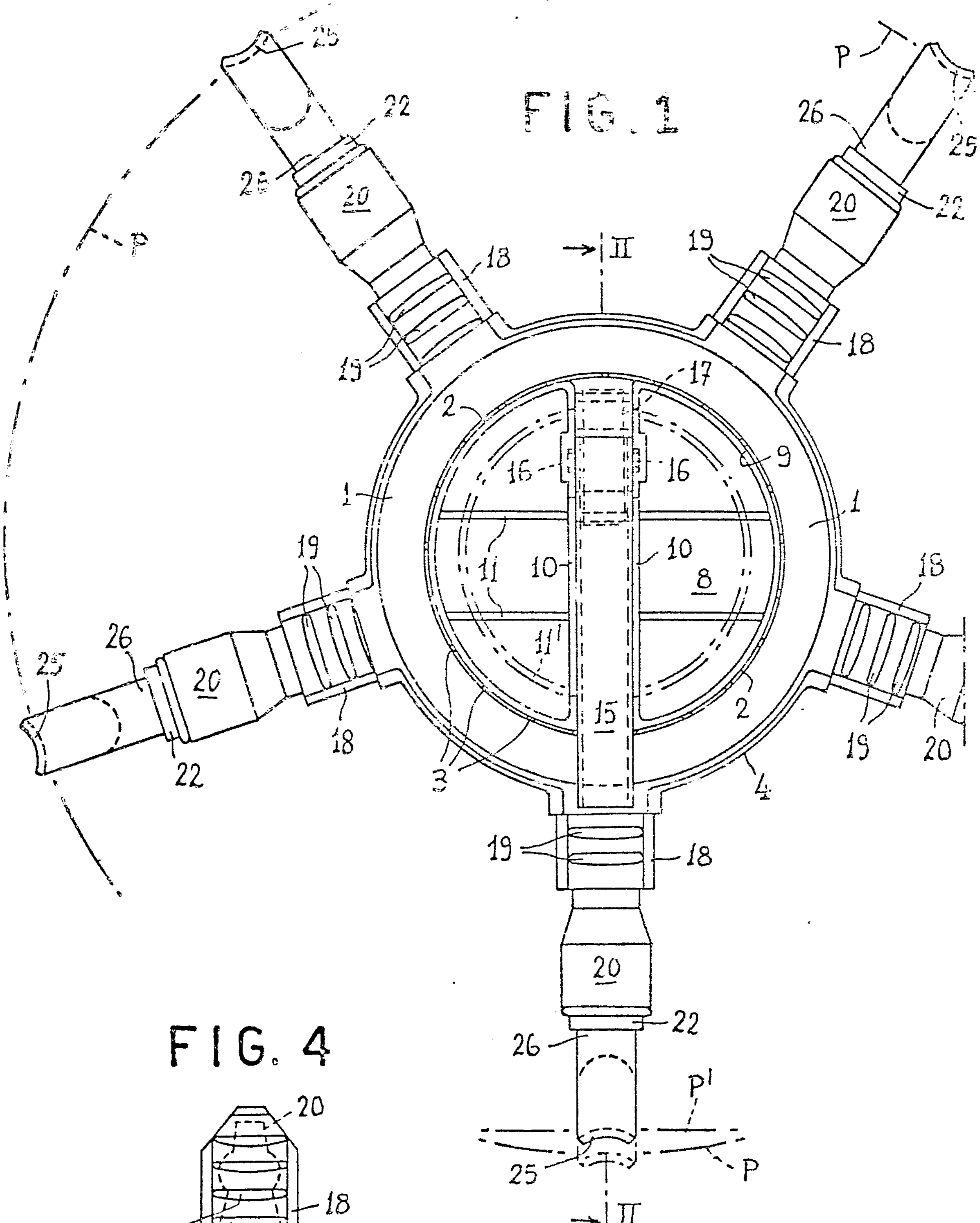


FIG. 4

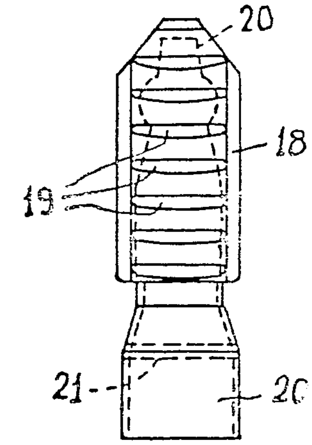


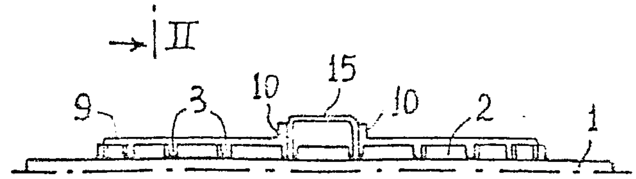


FIG. 5

Office européen des brevets

# RAPPORT DE RECHERCHE EUROPEENNE

EP 79 20 0630



| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | CH - A - 210 297 (RUEDIN-RUEDIN)<br>* Page 1, colonne de gauche, ligne 1 - colonne de droite, ligne 19; figures 1-3 *<br>-- | 1,2 | |
| A | FR - A - 508 525 (LARDOT)<br>* Page 1, ligne 8 - page 2, ligne 39; figure 1 *<br>-- | 1,2 | |
| A | FR - A - 1 030 420 (DROUX)<br>* Page 1, colonne de gauche, ligne 5 - colonne de droite, ligne 3; figures 1-4 *<br>-- | 1,2 | DOMAINES TECHNIQUES RECHERCHES (Int. Cl. 3) |
| A | US - A - 2 183 464 (NASH)<br>* Page 1, colonne de droite, ligne 8 - page 2, colonne de gauche, ligne 67; figures 1-5 *<br>---- | 1,2 | |

Office européen des brevets

# RAPPORT DE RECHERCHE EUROPEENNE

0011888

Numéro de la demande

EP 79 20 0630

## DOCUMENTS CONSIDERES COMME PERTINENTS

| Catégorie | Citation du document avec indication, en cas de besoin, des parties pertinentes | Revendication concernée |
|---|---|---|
| X | US - A - 2 575 263 (EISENHAUER)<br>* Colonne 1, ligne 51 - colonne 4, ligne 32; figures 1-3 *<br>-- | 1-5,8 |
| A | FR - A - 2 164 616 (DIAZ GOMEZ)<br>* Page 1, ligne 22 - page 7, ligne 29; figures 1-9 *<br>-- | 1,2,5 |
| A | US - A - 2 456 438 (MILLER)<br>* Colonne 2, ligne 7 - colonne 3, ligne 65; figures 1-6 *<br>-- | 1,2,8 |
| A | GB - A - 498 623 (KNIGHT)<br>* Page 5, ligne 72 - page 9, ligne 112 *<br>-- | 1,2 |
| A | DE - C - 316 760 (BAUMANN)<br>* Page 1, ligne 29 - page 2, ligne 30; figures 1,2<br>-- | 1,2 |
| A | FR - A - 755 123 (GROSREY)<br>* Page 1, lignes 11-48 *<br>-- | 1,2 |
| A | US - A - 2 007 853 (FUSS)<br>* Page 1, colonne de gauche, ligne 37 - colonne de droite, ligne 47; figures 1-7 *<br>--<br>./. | 1,2 |

**CLASSEMENT DE LA DEMANDE (Int. Cl.³)**

B 60 C 27/04
B 60 B 15/12

**DOMAINES TECHNIQUES RECHERCHES (Int. Cl.³)**

B 60 C 27/
B 60 B 15/

**CATEGORIE DES DOCUMENTS CITES**

- X: particulièrement pertinent
- A: arrière-plan technologique
- O: divulgation non-écrite
- P: document intercalaire
- T: théorie ou principe à la base de l'invention
- E: demande faisant interférence
- D: document cité dans la demande
- L: document cité pour d'autres raisons
- &: membre de la même famille, document correspondant

X Le présent rapport de recherche a été établi pour toutes les revendications

| Lieu de la recherche | Date d'achèvement de la recherche | Examinateur |
|---|---|---|
| La Haye | 05-03-1980 | AYITER |